# EUROPEAN PATENT APPLICATION

(11) **EP 4 361 612 A1**
(43) Date of publication of application: **01.05.2024**
(21) Application number: 21946255.3
(22) Date of filing: 21.06.2021
(51) Int. Cl.: G01N 21/88, G01N 21/57

(54) **COATING EVALUATION DEVICE AND COATING EVALUATION METHOD**

(71) Applicant: NISSAN MOTOR CO., LTD., Kanagawa 221-0023 (JP); Renault s.a.s, 92100 Boulogne Billancourt (FR)
(72) Inventor: KAITO, Takahiro, Atsugi-shi, Kanagawa 243-0123 (JP); YAMAZAKI, Shota, Atsugi-shi, Kanagawa 243--0123 (JP); UEHARA, Yoshitaka, Atsugi-shi, Kanagawa 243-0123 (JP); YUGE, Kentarou, Atsugi-shi, Kanagawa 243--0123 (JP); NAGAYAMA, Mori, Atsugi-shi, Kanagawa 243--0123 (JP)
(74) Representative: Global IP Europe Patentanwaltskanzlei
(86) International application number: PCT/IB2021/000414
(87) International publication number: WO 2022/269300

(57) **Abstract**

In a coating evaluation device and a coating evaluation method, a coating surface is irradiated with incident light having a first intensity distribution, and a second intensity distribution of light reflected from the coating surface is acquired. Additionally, a third intensity distribution associated with the second intensity distribution is calculated on the basis of a curved shape of the coating surface, and an evaluation value that corresponds to the third intensity distribution is estimated by using an evaluation model that outputs a brilliance evaluation value pertaining to the coating surface in response to an input including the third intensity distribution.

## Description

### Technical Field

The present invention relates to a coating evaluation device and a coating evaluation method.

### Background Technology

An invention is known that: projects light/dark pattern light that is a repeating pattern of light and darkness onto a coating surface; images a light/dark pattern formed on the coating surface and calculates a luminance distribution in a repetition direction of the light and darkness; carries out a Fourier transform on the luminance distribution; calculates a wavelength distribution, which is a distribution of amplitudes relating to wavelengths; calculates an integration value of a section corresponding to a prescribed wavelength band; and evaluates the coating surface on the basis of the integration value (Patent Document 1).

### Prior Art Documents

### Patent Documents

Patent Document 1: Japanese Laid-Open Patent Application No. 11-194096

### Disclosure of the Invention

### Problems to Be Solved by the Invention

In the invention disclosed in Patent Document 1, when the coating surface is curved, a problem is presented in that boundaries between light and darkness in the formed light/dark pattern can become blurred and accuracy in evaluating brilliance of the coating surface can decrease.

The present invention was contrived in view of the above problem, it being an object of the invention to provide a coating evaluation device and a coating evaluation method with which it is possible to accurately evaluate brilliance of a coating surface even if the coating surface is curved.

### Means Used to Solve the Above-Mentioned Problems

In a coating evaluation device and a coating evaluation method according to one aspect of the present invention, a coating surface is irradiated with incident light having a first intensity distribution, and a second intensity distribution of light reflected from the coating surface is acquired. Additionally, a third intensity distribution associated with the second intensity distribution is calculated on the basis of a curved shape of the coating surface, and an evaluation value that corresponds to the third intensity distribution is estimated by using an evaluation model that outputs a brilliance evaluation value pertaining to the coating surface in response to an input including the third intensity distribution.

### Effect of the Invention

Accordingly, the present invention makes it possible to accurately evaluate brilliance of a coating surface even if the coating surface is curved.

### Brief Description of the Drawings

Figure 1 is a block diagram showing a configuration of a coating evaluation device according to one embodiment of the present invention.
Figure 2 is a flow chart showing a process of the coating evaluation device according to the one embodiment of the present invention.
Figure 3A is a schematic diagram showing a first example of a first intensity distribution of incident light.
Figure 3B is a schematic diagram showing a second example of a first intensity distribution of incident light.
Figure 4A is a schematic diagram showing an example of a first marking pattern.
Figure 4B is a schematic diagram showing an example of a second marking pattern.

### Preferred Embodiments of the Invention

A preferred embodiment of the present invention is described below with reference to the drawings. Identical portions disclosed in the drawings are assigned identical reference symbols and are not redundantly described.

### (Configuration of Coating Evaluation Device)

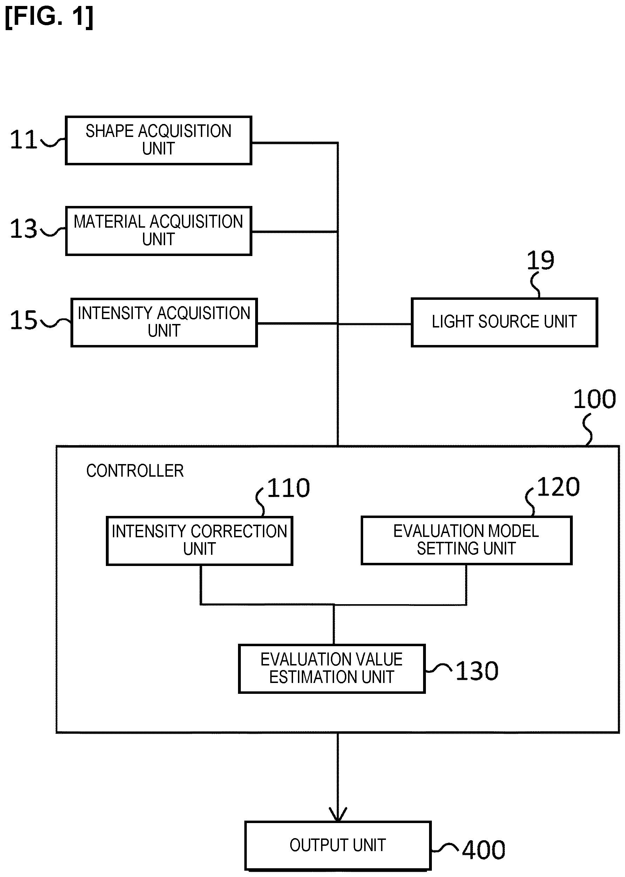

An example of a configuration of a coating evaluation device according to the present embodiment shall be described with reference to Fig. 1. As shown in Fig. 1, the coating evaluation device comprises a shape acquisition unit 11, an intensity acquisition unit 15, a light source unit 19, and a controller 100. In addition, the coating evaluation device can also comprise a material acquisition unit 13 and an output unit 400. The shape acquisition unit 11, the material acquisition unit 13, the intensity acquisition unit 15, the light source unit 19, and the output unit 400 are connected to the controller 100.

The shape acquisition unit 11 acquires shape information representing a curved shape of a coating surface for which a coating is being evaluated. More specifically, the shape acquisition unit 11 can acquire design data pertaining to the coating surface as the shape information. Examples of the design data include computer-aided design (CAD) data. The design data is not limited to CAD data, provided that the design data represents an extent of curving (curvature) of the coating surface.

The shape acquisition unit 11 can acquire stored design data pertaining to the coating surface from a database (not shown) or can acquire the design data pertaining to the coating surface from external connection equipment (not shown) via a wired or wireless network. In addition, the shape acquisition unit 11 can acquire the design data on the basis of an input from a user.

The shape acquisition unit 11 can also acquire measurement data obtained by measuring the coating surface as the shape information. Examples of the shape acquisition unit 11 include 3D scanners.

In addition, the shape acquisition unit 11 can acquire position information pertaining to a region of the coating surface that has been irradiated with incident light by the light source unit 19 (described later) and acquire the shape information on the basis of the position information. Specifically, the shape acquisition unit 11 can acquire the design data pertaining to the coating surface, or the measurement data obtained by measuring the coating surface, with reference to the position of the region that has been irradiated with the incident light.

The material acquisition unit 13 acquires material information pertaining to the coating surface. More specifically, the material acquisition unit 13 acquires a type, a color, or other information pertaining to a member as the material information pertaining to the coating surface. The material acquisition unit 13 can acquire stored material information pertaining to the coating surface from a database (not shown) or can acquire the material data pertaining to the coating surface from external connection equipment (not shown) via a wired or wireless network. In addition, the material acquisition unit 13 can acquire the material information on the basis of the input from the user.

The light source unit 19 irradiates the coating surface with incident light having a set first intensity distribution. More specifically, the light source unit 19 has a plurality of light sources arranged in a planar form and is such that intensity of light emitted from the light sources is adjusted by the controller 100 (described later), whereby the coating surface is irradiated with the incident light having the first intensity distribution.

Various examples of the light sources constituting the light source unit 19 include LED lamps, incandescent light bulbs, fluorescent lamps, and the like.

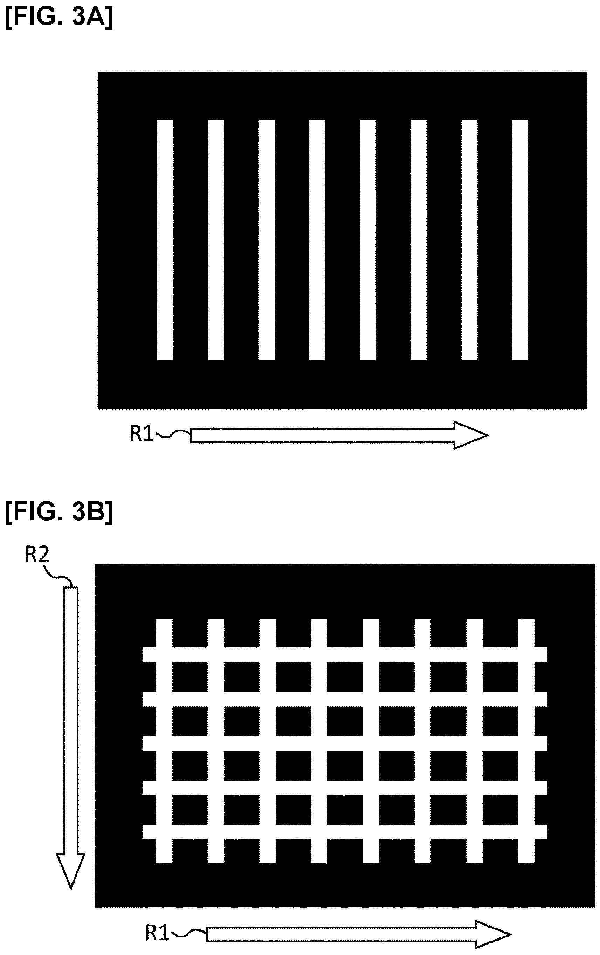

The first intensity distribution of the incident light can have a periodic structure in a first direction. Fig. 3A shows an example of the first intensity distribution in which bright portions and dark portions are successively lined up along an R1 direction, the first intensity distribution having a striped periodic structure. The first intensity distribution can also have a periodic structure in a second direction that is different from the first direction. Fig. 3B shows an example of the first intensity distribution in which bright portions and dark portions are successively lined up along an R2 direction different from the R1 direction, the first intensity distribution having a stripe-form periodic structure.

The first intensity distribution of the incident light can have a periodic structure in a direction of a main-direction vector at a prescribed position on the coating surface. The term "main-direction vector" refers to a tangent vector of the coating surface in a case where a curvature of a curve that includes the tangent vector and a normal vector of the coating surface and that is visible in a portion shared by a flat surface and the coating surface is a main curvature of the coating surface at the prescribed position.

For example, the main-direction vector at the prescribed position on the coating surface can be calculated by the controller 100 (described later) based on the shape information acquired by the material acquisition unit 13, and an intensity distribution having a periodic structure in the direction of the main-direction vector can be employed as the first intensity distribution. Alternatively, the coating surface can be rotated relative to the light source unit 19 about an axis parallel to the incidence direction of the incident light so as to attain a positional relationship such that the first direction in which the first intensity distribution has a periodic structure and the main-direction vector at the prescribed position on the coating surface match each other.

In addition, intensity of light can change intermittently at boundary portions between the "bright portions" and the "dark portions" in the first intensity distribution. Thus, for example, when the intensity of the incident light at the "bright portions" (first region) is equal to or greater than a first threshold value, the intensity of the incident light at the "dark portions" (second region) can be less than the first threshold value and equal to or less than a second threshold value.

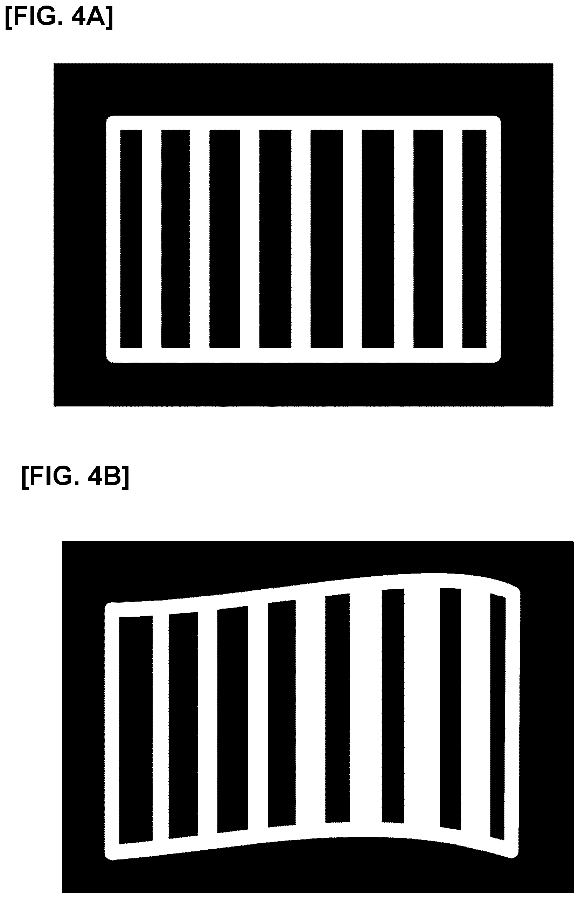

In addition, for the purpose of alignment, the light source unit 19 can emit incident light that includes a first marking pattern. Fig. 4A shows an example of a rectangular first marking pattern that is set so as to surround the incident light having the first intensity distribution shown in Fig. 3A.

Because the coating surface can have a variety of curved shapes, the intensity distribution of light reflected from the coating surface can change in accordance with the curved shape. Fig. 4B shows a second marking pattern that is curved from a rectangular form in accordance with a curved shape. Comparing the first marking pattern and the second marking pattern makes it possible to calculate the extent of curving of a region that has been irradiated with the first marking pattern.

The intensity acquisition unit 15 acquires a second intensity distribution of light reflected from the coating surface that received the incident light. More specifically, the intensity acquisition unit 15 is a digital camera provided with a CCD, a CMOS, or another solid-state imaging element, the intensity acquisition unit 15 imaging the region of the coating surface that has been irradiated with the incident light and acquiring a digital image. The second intensity distribution is expressed using the intensity of light in each pixel constituting the digital image.

In the intensity acquisition unit 15, a focal length, an angle of view of a lens, an angle formed by a direction perpendicular to the camera and a horizontal direction, and other such factors are set, whereby the region that has been irradiated with the incident light is imaged.

The intensity acquisition unit 15 can also acquire, as the second marking pattern, the intensity distribution of light reflected from the region of the coating surface that has been irradiated with the first marking pattern.

Comparing the first marking pattern and the second marking pattern makes it possible to calculate the extent of curving of the region that has been irradiated with the first marking pattern. For example, the controller 100 (described later) can acquire reference shape information pertaining to the region that has been irradiated with the first marking pattern on the basis of a difference between the first marking pattern and the second marking pattern.

It is also permissible to acquire position information pertaining to a region on the coating surface that has shape information matching the reference shape information. This makes it possible to carry out alignment suited to the region that has been irradiated with the incident light and acquire the shape information.

The controller 100 is a general-purpose computer provided with a central processing unit (CPU), a memory, a storage device, an input/output unit, and the like.

A computer program (coating evaluation program) for causing the controller 100 to function as the coating evaluation device is installed in the controller 100. Executing the computer program results in the controller 100 functioning as a plurality of information processing circuits provided to the coating evaluation device.

In the present case, an example is described in which the plurality of information processing circuits provided to the coating evaluation device are realized using software, but as shall be apparent, it is also possible to prepare dedicated hardware for executing information processes (indicated below) to constitute the information processing circuits. The plurality of information processing circuits can also be configured from individual articles of hardware.

The controller 100 is provided with an intensity correction unit 110, an evaluation model setting unit 120, and an evaluation value estimation unit 130.

The intensity correction unit 110 calculates, on the basis of the shape information, a third intensity distribution associated with the second intensity distribution. Specifically, the second intensity distribution includes a scattering component of light that is generated by deviation of the curved shape of the coating surface from a flat shape. Therefore, the intensity correction unit 110 calculates the third intensity distribution so as to negate the scattering component of light on the coating surface that is included in the second intensity distribution and is produced by the aforementioned deviation.

The scattering component of light that is generated by the deviation of the curved shape of the coating surface from the flat shape is calculated by using rendering technology, shading, or another simulation technology in which computer graphics are used. Using these simulation technologies makes it possible for the intensity correction unit 110 to calculate the third intensity distribution so as to negate the scattering component of light on the coating surface that is included in the second intensity distribution and is produced by the aforementioned deviation.

For example, a difference between the second intensity distribution and the third intensity distribution decreases commensurately with a decrease in deviation of the curved shape from the flat shape. Additionally, the second intensity distribution and the third intensity distribution match each other when the curved shape is the flat shape.

The evaluation model setting unit 120 sets an evaluation model that outputs a brilliance evaluation value pertaining to the coating surface in response to an input including the third intensity distribution. The evaluation model is a trained model generated through machine learning that is based on teaching data in which an intensity distribution of reflected light obtained by irradiating a flat evaluated coating surface with the incident light and a brilliance evaluation value pertaining to the evaluated coating surface are taken as a set.

The brilliance evaluation value is an index determined according to at least one of, e.g., smoothness of the coating surface, a proportion of the light reflected by the coated surface via diffuse reflection, and resolution of an image appearing on the coating surface. The brilliance evaluation value pertaining to the evaluated coating surface is a numeric value assigned in advance to the evaluated coating surface according to another technique for evaluating brilliance.

The evaluation model setting unit 120 can set an evaluation model that outputs a brilliance evaluation value pertaining to the coating surface in response to an input including the material information and the third intensity distribution. In this case, the evaluation model is a trained model generated through machine learning that is based on teaching data in which the material information pertaining to a flat evaluated coating surface, an intensity distribution of reflected light obtained by irradiating the evaluated coating surface with the incident light, and the brilliance evaluation value pertaining to the evaluated coating surface are taken as a set.

Examples of a technique for generating the trained model through machine learning include techniques using one, or a combination of two or more, from among neural networks, support vector machines, Random Forest, XGBoost, LightGBM, PLS regression, Ridge regression, and Lasso regression. The technique for generating the trained model through machine learning is not limited to the examples listed above.

The evaluation model setting unit 120 can also perform machine learning on the basis of teaching data acquired from a database (not shown) to set the evaluation model. Alternatively, the evaluation model may be stored in a database (not shown) in advance, and the evaluation model setting unit 120 may set the evaluation model acquired from the database.

The evaluation value estimation unit 130 estimates an evaluation value that corresponds to the third intensity distribution by using the set evaluation model. More specifically, when the set evaluation model is an evaluation model that outputs a brilliance evaluation value pertaining to the coating surface in response to an input including the third intensity distribution, the evaluation value estimation unit 130 inputs the third intensity distribution to the evaluation model. The evaluation value estimation unit 130 then employs a value outputted from the evaluation model as the evaluation value that corresponds to the third intensity distribution. The evaluation value that corresponds to the third intensity distribution is an estimated evaluation value relating to the brilliance of the coating surface.

When the set evaluation model is an evaluation model that outputs a brilliance evaluation value pertaining to the coating surface in response to the input including the material information and the third intensity distribution, the evaluation value estimation unit 130 inputs the material information and the third intensity distribution to the evaluation model. The evaluation value estimation unit 130 then employs a value outputted from the evaluation model as an evaluation value that corresponds to a combination of the material information and the third intensity distribution. The evaluation value that corresponds to the third intensity distribution is an estimated evaluation value relating to the brilliance of the coating surface.

The output unit 400 outputs the estimated evaluation value relating to the brilliance of the coating surface.

### (Procedure of Process Performed by Coating Evaluation Device)

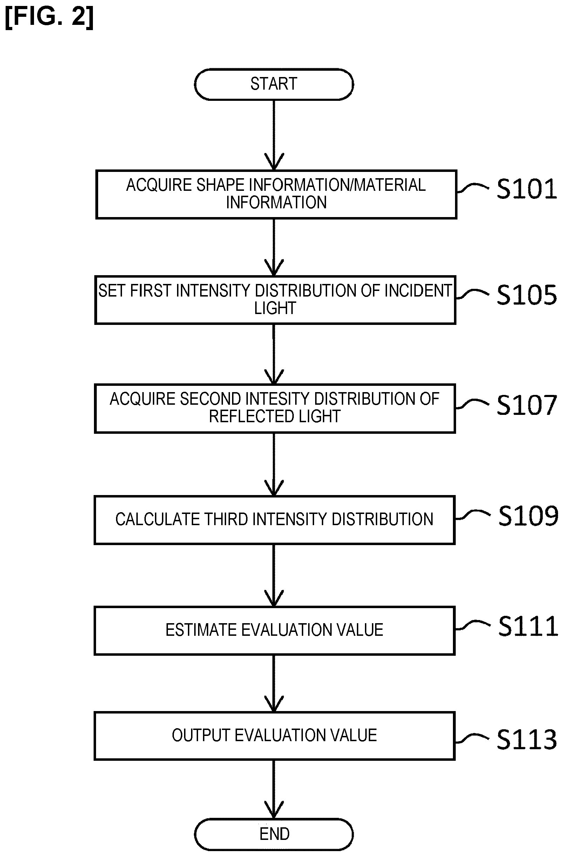

A procedure of a process performed by the coating evaluation device according to the present embodiment shall be described next with reference to the flow chart in Fig. 2. The evaluation model is already set by the evaluation model setting unit 120 before the process shown in the flow chart in Fig. 2 is started.

In step S101, the shape acquisition unit 11 acquires the shape information. Additionally, the material acquisition unit 13 acquires the material information.

In step S 105, the controller 100 sets the first intensity distribution of the incident light.

In step S107, the intensity acquisition unit 15 acquires the second intensity distribution of the reflected light.

In step S109, the intensity correction unit 110 calculates, on the basis of the shape information, the third intensity distribution associated with the second intensity distribution.

In step 5111, the evaluation value estimation unit 130 estimates the evaluation value that corresponds to the third intensity distribution by using the set evaluation model.

In step S113, the output unit 400 outputs the evaluation value estimated by the evaluation value estimation unit 130.

### (Effects of Embodiment)

As was discussed in detail above, in the coating evaluation device, coating evaluation method, and coating evaluation program according to the present embodiment, a coating surface is irradiated with incident light having a first intensity distribution, and a second intensity distribution of light reflected from the coating surface is acquired. Additionally, a third intensity distribution associated with the second intensity distribution is calculated on the basis of a curved shape of the coating surface, and an evaluation value that corresponds to the third intensity distribution is estimated by using an evaluation model that outputs a brilliance evaluation value pertaining to the coating surface in response to an input including the third intensity distribution.

This makes it possible to accurately evaluate the brilliance of the coating surface even when the coating surface is curved. Additionally, because the evaluation value is estimated by the evaluation model, the need for dedicated equipment or experts for evaluating the brilliance of the coating surface is obviated, and the cost in evaluating the brilliance of the coating surface can be reduced.

In the coating evaluation device, coating evaluation method, and coating evaluation program according to the present embodiment, a difference between the second intensity distribution and the third intensity distribution can decrease commensurately with a decrease in deviation of the curved shape from a flat shape. Additionally, the second intensity distribution and the third intensity distribution can match each other when the curved shape is the flat shape. This makes it possible for a scattering component of light on the coating surface that is produced by the deviation of the curved shape from the flat shape to be eliminated from the second intensity distribution. Specifically, the third intensity distribution is calculated so as to negate the scattering component of light on the coating surface that is included in the second intensity distribution and is produced by the aforementioned deviation.

In the coating evaluation device, coating evaluation method, and coating evaluation program according to the present embodiment, the evaluation model may be a trained model generated through machine learning that is based on teaching data in which an intensity distribution of reflected light obtained by irradiating a flat evaluated coating surface with the incident light and a brilliance evaluation value pertaining to the evaluated coating surface are taken as a set. This makes it possible to accurately evaluate the brilliance of the curved coating surface by using the evaluation model generated from the teaching data relating to the flat evaluated coating surface.

In the coating evaluation device, coating evaluation method, and coating evaluation program according to the present embodiment, the brilliance evaluation value pertaining to the coating surface can be an index determined according to at least one of a degree of smoothness of the coating surface, a proportion of the light reflected by the coated surface via diffuse reflection, and a degree of resolution of an image appearing on the coating surface. Thus, a criterion pertaining to evaluation of the brilliance of the coating surface is elucidated.

In the coating evaluation device, coating evaluation method, and coating evaluation program according to the present embodiment, design data pertaining to the coating surface can be acquired as the shape information, and measurement data obtained by measuring the coating surface can also be acquired as the shape information. This makes it possible to minimize any effect caused by the curved shape of the coating surface and to accurately evaluate the brilliance of the coating surface.

In the coating evaluation device, coating evaluation method, and coating evaluation program according to the present embodiment, the first intensity distribution can have a periodic structure in a first direction. For example, the first intensity distribution can have a striped periodic structure. This makes it possible to evaluate the coating surface on the basis of a luminance distribution following a given direction on the periodic structure and to accurately evaluate the brilliance of the coating surface.

In the coating evaluation device, coating evaluation method, and coating evaluation program according to the present embodiment, the first intensity distribution may have a periodic structure in a second direction that is different from the first direction. This makes it possible to evaluate the coating surface on the basis of a luminance distribution following a given direction on the periodic structure and to accurately evaluate the brilliance of the coating surface. Furthermore, any effect originating from the direction of the periodic structure to evaluate the coating surface can be reduced.

In the coating evaluation device, coating evaluation method, and coating evaluation program according to the present embodiment, a main-direction vector at a prescribed position on the coating surface may be calculated on the basis of the shape information, and an intensity distribution that has a periodic structure in a direction of the main-direction vector can be set as the first intensity distribution. This makes it possible to minimize any effect caused by the curved shape of the coating surface and to accurately evaluate the brilliance of the coating surface.

In the coating evaluation device, coating evaluation method, and coating evaluation program according to the present embodiment, the first intensity distribution can have a first region in which the intensity of the incident light is equal to or greater than a first threshold value, and a second region in which the intensity of the incident light is less than the first threshold value and is equal to or less than a second threshold value. This makes it possible for the intensity of the light to change intermittently at boundary portions between the "bright portions" and the "dark portions" in the first intensity distribution and makes it possible to accurately evaluate the brilliance of the coating surface.

In the coating evaluation device, coating evaluation method, and coating evaluation program according to the present embodiment, position information pertaining to a region of the coating surface that has been irradiated with the incident light can be acquired, and the shape information can be acquired on the basis of the position information. This makes it possible to align the coating surface being evaluated and the curved shape expressed using the shape information.

In the coating evaluation device, coating evaluation method, and coating evaluation program according to the present embodiment, the coating surface can be irradiated with incident light that includes a first marking pattern, and the intensity distribution of light reflected from a region of the coating surface that has been irradiated with the first marking pattern can be acquired as a second marking pattern. Moreover, reference shape information pertaining to the region that has been irradiated with the first marking pattern can be acquired on the basis of a difference between the first marking pattern and the second marking pattern, and position information pertaining to a region on the coating surface that has shape information matching the reference shape information can be acquired. This makes it possible to align the coating surface being evaluated and the curved shape to be expressed using the shape information.

In the coating evaluation device, coating evaluation method, and coating evaluation program according to the present embodiment, material information pertaining to the coating surface can be acquired, and an evaluation value that corresponds to a combination of the material information and the third intensity distribution can be estimated by using an evaluation model that outputs a brilliance evaluation value pertaining to the coating surface in response to an input including the material information and the third intensity distribution. Additionally using the material information pertaining to the coating surface in addition to the intensity distribution of the reflected light in evaluating the brilliance of the coating surface makes it possible to accurately evaluate the brilliance of the coating surface.

In the coating evaluation device, coating evaluation method, and coating evaluation program according to the present embodiment, the evaluation model can be a trained model generated through machine learning that is based on teaching data in which the material information pertaining to a flat evaluated coating surface, an intensity distribution of reflected light obtained by irradiating the evaluated coating surface with the incident light, and the brilliance evaluation value pertaining to the evaluated coating surface are taken as a set. This makes it possible to accurately evaluate the brilliance of the curved coating surface by using the trained model generated from the teaching data relating to the flat evaluated coating surface.

The functions indicated in the embodiment described above can be implemented using one or a plurality of processing circuits. The processing circuits include a programmed processor, an electronic circuit, or the like, and furthermore include a device such as an application-specific integrated circuit (ASIC), a circuit configuration element disposed so as to execute the described functions, or the like.

The content of the present invention is described above in accordance with an embodiment, but the present invention is not limited to the abovementioned descriptions; it would be obvious to a person skilled in the art that various modifications and improvements can be made. The statements and drawings that form part of the present disclosure should not be understood to limit the present invention. A variety of alternative embodiments, examples, and fields of application would be obvious to a person skilled in the art from the present disclosure.

It should be apparent that the present invention includes a variety of embodiments and the like that are not described above. Therefore, the technical scope of the present invention is established only by the invention-defining matter pertaining to the valid claims from the above descriptions.

### Key

- 11: Shape acquisition unit
- 13: Material acquisition unit
- 15: Intensity acquisition unit
- 19: Light source unit
- 100: Controller
- 110: Intensity correction unit
- 120: Evaluation model setting unit
- 130: Evaluation value estimation unit
- 400: Output unit

## Claims

1. A coating evaluation device comprising:
a shape acquisition unit configured to acquire shape information representing a curved shape of a coating surface;
a light source unit configured to irradiate the coating surface with incident light having a first intensity distribution;
an intensity acquisition unit configured to acquire a second intensity distribution of light reflected from the coating surface; and
a controller configured to
calculate a third intensity distribution associated with the second intensity distribution based on the shape information, and
estimate an evaluation value that corresponds to the third intensity distribution by using an evaluation model that outputs a brilliance evaluation value pertaining to the coating surface in response to an input including the third intensity distribution.

2. The coating evaluation device according to claim 1, wherein
a difference between the second intensity distribution and the third intensity distribution decreases commensurately with a decrease in a deviation of the curved shape from a flat shape, and
the second intensity distribution and the third intensity distribution match each other when the curved shape is the flat shape.

3. The coating evaluation device according to claim 2, wherein
the controller is configured to calculate the third intensity distribution so as to negate a scattering component of light on the coating surface that is included in the second intensity distribution and is produced by the deviation.

4. The coating evaluation device according to any of claims 1 to 3, wherein
the evaluation model is a trained model generated through machine learning that is based on teaching data in which an intensity distribution of reflected light obtained by irradiating a flat evaluated coating surface with the incident light and the brilliance evaluation value pertaining to the evaluated coating surface are taken as a set.

5. The coating evaluation device according to any of claims 1 to 4, wherein
the brilliance evaluation value pertaining to the coating surface is an index determined according to at least one of a degree of smoothness of the coating surface, a proportion of the light reflected by the coated surface via a diffuse reflection, and a degree of resolution of an image appearing on the coating surface.

6. The coating evaluation device according to any of claims 1 to 5, wherein
the shape acquisition unit is configured to acquire design data pertaining to the coating surface as the shape information.

7. The coating evaluation device according to any of claims 1 to 6, wherein
the shape acquisition unit is configured to acquire measurement data obtained by measuring the coating surface as the shape information.

8. The coating evaluation device according to any of claims 1 to 7, wherein
the first intensity distribution has a periodic structure in a first direction.

9. The coating evaluation device according to claim 8, wherein
the first intensity distribution has a periodic structure in a second direction that is different from the first direction.

10. The coating evaluation device according to any of claims 1 to 9, wherein
the controller is configured to calculate a main-direction vector at a prescribed position on the coating surface based on the shape information, and is configured to set an intensity distribution that has a periodic structure in a direction of the main-direction vector as the first intensity distribution.

11. The coating evaluation device according to any of claims 1 to 10, wherein
the first intensity distribution has a first region in which an intensity of the incident light is equal to or greater than a first threshold value, and a second region in which the intensity of the incident light is less than the first threshold value and is equal to or less than a second threshold value.

12. The coating evaluation device according to any of claims 1 to 11, wherein
the shape acquisition unit is configured to acquire position information pertaining to a region of the coating surface that has been irradiated with the incident light, and is configured to acquire the shape information based on the position information.

13. The coating evaluation device according to any of claims 1 to 12, wherein:
the intensity acquisition unit is configured to acquire an intensity distribution of light reflected from a region of the coating surface that has been irradiated with the first marking pattern as a second marking pattern; and
the controller is configured to acquire reference shape information pertaining to the region that has been irradiated with the first marking pattern based on a difference between the first marking pattern and the second marking pattern, and is configured to acquire position information pertaining to a region on the coating surface that has the shape information matching the reference shape information.

14. The coating evaluation device according to any of claims 1 to 13, further comprising
a material acquisition unit is configured to acquire material information pertaining to the coating surface, and
the controller being configured to estimate the evaluation value that corresponds to a combination of the material information and the third intensity distribution by using the evaluation model that outputs a brilliance evaluation value pertaining to the coating surface in response to an input including the material information and the third intensity distribution.

15. The coating evaluation device according to claim 14, wherein
the evaluation model is a trained model generated through machine learning that is based on teaching data in which the material information pertaining to a flat evaluated coating surface, an intensity distribution of reflected light obtained by irradiating the evaluated coating surface with the incident light, and a brilliance evaluation value pertaining to the evaluated coating surface are taken as a set.

16. A coating evaluation method comprising:
acquiring shape information representing a curved shape of a coating surface;
irradiating the coating surface with incident light having a first intensity distribution;
acquiring a second intensity distribution of light reflected from the coating surface;
calculating a third intensity distribution associated with the second intensity distribution based on the shape information; and
estimating an evaluation value that corresponds to the third intensity distribution by using an evaluation model that outputs a brilliance evaluation value pertaining to the coating surface in response to an input including the third intensity distribution.

17. A coating evaluation program configured to
cause a computer to control
a shape acquisition unit configured to acquire shape information representing a curved shape of a coating surface;
a light source unit configured to irradiate the coating surface with incident light having a first intensity distribution; and
an intensity acquisition unit configured to acquire a second intensity distribution of light reflected from the coating surface; and
to execute
a step for acquiring the shape information by using the shape acquisition unit,
a step for calculating a third intensity distribution associated with the second intensity distribution based on the shape information, and
a step for estimating an evaluation value that corresponds to the third intensity distribution by using an evaluation model that outputs a brilliance evaluation value pertaining to the coating surface in response to an input including the third intensity distribution.
